# EUROPÄISCHE PATENTSCHRIFT

(11) **EP 1 302 827 B1**
(45) Veröffentlichungstag und Bekanntmachung des Hinweises auf die Patenterteilung: **30.03.2005**
(21) Anmeldenummer: 02021691.7
(22) Anmeldetag: 27.09.2002
(51) Int. Cl.: G05B 19/05

(54) **Verfahren zum Melden von Ereignissen**
Method for reporting events
Procédé de notification d'évènements

(30) Priorität: 27.09.2001 DE 10147762
(43) Veröffentlichungstag der Anmeldung: 16.04.2003
(73) Patentinhaber: SIEMENS AKTIENGESELLSCHAFT, 80333 München (DE)
(72) Erfinder: Becker, Peter, 76571 Gaggenau (DE); Müller, Ingrid, 76767 Hagenbach (DE)

(56) Entgegenhaltungen:
- DE-A- 3 240 046
- DEPPE M: "SIMATIC AND PROFIBUS-DP - THE IDEAL COMBINATION FOR DISTRIBUTED CONTROL" ENGINEERING AND AUTOMATION, SIEMENS AKTIENGESELLSCHAFT, BERLIN, DE, Bd. 18, Nr. 2, 1. März 1996 (1996-03-01), Seiten 15-17, XP000587885 ISSN: 0939-2068

## Beschreibung

Die Erfindung betrifft ein Verfahren zum Melden von Ereignissen, gemäß dem Oberbegriff des Anspruchs 1.

Ein derartiges Verfahren ist von der Automatisierungsanlage SIMATIC S7 bekannt, die von der Siemens AG angeboten wird. Dieses Verfahren wird auch als "Quittierungsgetriggertes Melden" bezeichnet und mit "QTM" abgekürzt.

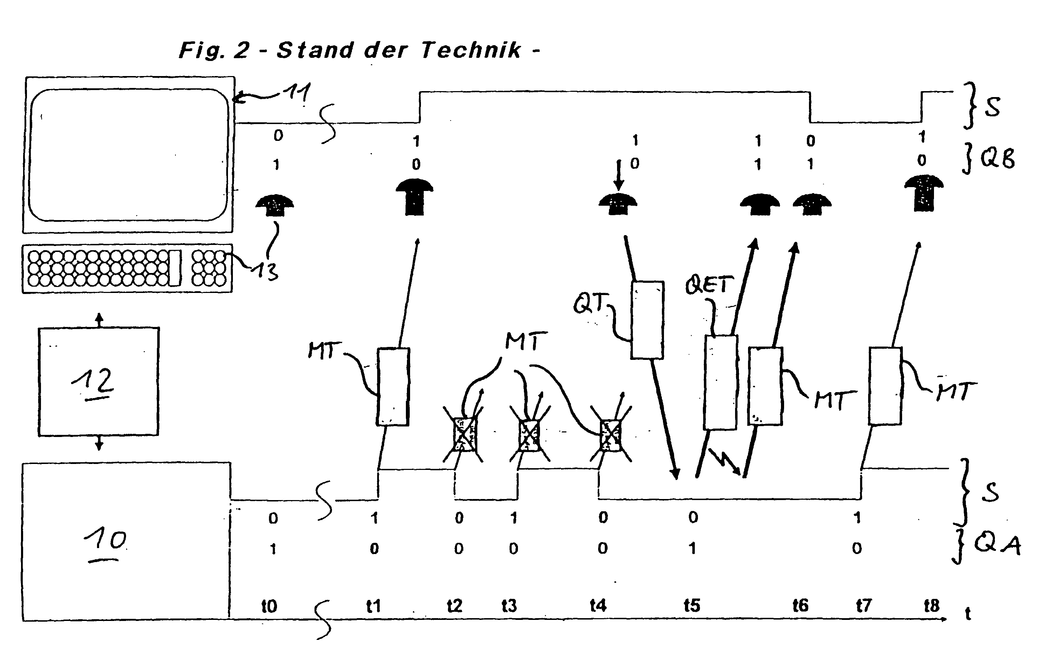

Diese bekannte Automatisierungsanlage ist in der FIG. 2 dargestellt und weist wenigstens eine Automatisierungsstation 10, wenigstens eine Bedien- und Beobachtungsstation 11, die im Folgenden kurz als "Bedienstation" bezeichnet wird, und einen Bus 12 auf, und in ihr werden gemäß dem bekannten Verfahren Ereignisse auf die Binärsignale S abgebildet, wie weiter unten näher erläutert wird. Die Änderungen dieser Signale S werden von den entsprechenden Automatisierungsstationen 10 erfasst und mit Hilfe von Meldungs-Telegrammen MT über den Bus 12 an zugeordnete Bedienstationen 11 gemeldet. Jede Bedienstation 11 zeigt die gemeldeten Signaländerungen an, so dass sie von einer Bedienperson wahrgenommen werden können.

Im Folgenden wird zur Beschreibung dieses bekannten QTM-Verfahrens auf die in der FIG. 2 dargestellte Automatisierungsanlage Bezug genommen und beispielhaft angenommen, dass die Automatisierungsstation 10 einer Pumpe (nicht dargestellt), die überwacht werden soll, zugeordnet ist, das Signal S, das den Ausfall der Pumpe repräsentiert, erfasst und mit der Bedienstation 11 über den Bus 12 kommuniziert. Dabei stellt der Signalpegel S=0 den Betriebszustand "Pumpe ist nicht ausgefallen" bzw. "Pumpe läuft ordnungsgemäß" und der Signalpegel S=1 den Betriebszustand "Pumpe ist ausgefallen" bzw. "Pumpe steht" dar, so dass die Signaländerung von S=0 nach S=1 (beispielsweise zum Zeitpunkt t1), also eine steigende Flanke das Ereignis "Ausfall der Pumpe" und die Signaländerung von S=1 nach S=0 (beispielsweise zum Zeitpunkt t4), also eine fallende Flanke das Ereignis "Start der Pumpe" darstellt. Es wird der Signalwechsel von S=0 nach S=1 von der Automatisierungsstation über den Bus 12 an die Bedienstation 11 gemeldet, die diese dann anzeigt.

Die Automatisierungsstation 10 führt außerdem für die Signaländerung von S=0 nach S=1 einen Quittierzustand QA, den sie löscht (beispielsweise zum Zeitpunkt t1), also von QA=1 auf QA=0 setzt, wenn sie diese vorgegebene Signaländerung an die Bedienstation 11 gemeldet hat. Folglich gibt der Signalzustand Auskunft über das Ereignis "Ausfall der Pumpe".

Auch die Bedienstation 11 führt für den vorgegebenen Signalwechsel von S=0 nach S=1 einen Quittierzustand QB, den sie löscht (beispielsweise zwischen den Zeitpunkten t1 und t2), wenn sie von der Automatisierungsstation 11 eine Meldung über diesen Signalwechsel erhalten hat. Da die Bedienstation 11 den Quittierzustand QB anzeigt, kann die Bedienperson aus dem Signalzustand S=1 erkennen, dass die Pumpe ausgefallen ist, und dann die Reparatur der Pumpe veranlassen.

Sobald die Pumpe erfolgreich repariert worden ist und wieder ordnungsgemäß läuft (zum Zeitpunkt t4), kann die Bedienperson dieses Ereignis an der Bedienstation 11 durch Betätigen einer entsprechenden Taste 13 quittieren (zwischen den Zeitpunkten t4 und t5). Diese Quittierung wird dann von der Bedienstation 11 mit Hilfe eines Quittierungs-Telegramms QT über den Bus 12 an die Automatisierungsstation 10 gemeldet, die darauf hin den Quittierzustand QA setzt (zum Zeitpunkt t5), also von QA=0 auf QA=1 setzt und ihrerseits den Erhalt des Quittierungs-Telegramms QT mit Hilfe eines Quittierungserhalt-Telegramms QET über den Bus 12 an die Bedienstation 11 meldet, die darauf hin ihrerseits den Quittierzustand QB setzt (zum Zeitpunkt t6).

Die FIG. 2 zeigt rechts neben der Automatisierungsstation 10 die Zeitverläufe des von dieser erfassten Signals S sowie des von dieser geführten Quittierungszustands QA und rechts neben der Bedienstation 11 die Zeitverläufe des von dieser angezeigten Signals S sowie des von dieser geführten Quittierungszustands QB.

Da es während der Reparatur, also in dem Zeitraum nach dem Melden der Signaländerung von S=0 nach S=1 zum Zeitpunkt t1 bis zum Melden der Quittierung zum Zeitpunkt t5, häufig vorkommt, dass das Signal S flattert und die Automatisierungsstation 10 somit viele und schnell aufeinander folgende Signaländerungen erfasst (beispielsweise zu den Zeitpunkten t2, t3 und t4), die jedoch den Betriebszustand der Pumpe nicht zuverlässig wiedergeben, ist bei dem bekannten QTM-Verfahren vorgesehen, das diese Signaländerungen so lange unterdrückt, also nicht an die Bedienstation 11 gemeldet werden, wie der Quittierzustand QA gelöscht ist. Dies kann umgekehrt auch derart ausgedrückt werden, dass die Automatisierungsstation 10 nur dann eine Signaländerung meldet, wenn der Quittierzustand QA gesetzt ist. Demnach meldet die Automatisierungsstation 10 erst dann die zuletzt erfasste Signaländerung, wenn sie das Quittierungs-Telegramm QT erhalten und den Quittierzustand QA gesetzt hat. Die Automatisierungsstation 10 meldet diese letzte Signaländerung wieder mit Hilfe eines Meldungs-Telegramms MT, das sie nach dem Quittierungserhalt-Telegramm QET sendet, über den Bus 12 an die Bedienstation 11.

Dieses letzte Meldungs-Telegramm MT verursacht jedoch eine Kommunikationsbelastung der gesamten Automatisierungsanlage, also Automatisierungsstation 10, Bedienstation 11 und Bus 12, die dadurch noch gesteigert wird, dass durch eine Sammelquittierung, mit der mehrere Signale durch Betätigen einer einzigen Taste an der Bedienstation 12 gleichzeitig quittiert werden, sehr viele dieser Meldungs-Telegramme MT gleichzeitig erzeugt werden.

Es ist daher Aufgabe der Erfindung, ein Verfahren zum Melden von Ereignissen der zu Beginn genannten Art zu schaffen, das mit weniger Meldungen auskommt.

Diese Aufgabe wird dadurch gelöst, dass
die Meldung über den Erhalt der Meldung über die Quittierung (QET) eine Information über den aktuellen Signalzustand enthält.

Da somit das gesonderte Meldungs-Telegramm, das bei dem bekannten QTM-Verfahren nach dem Quittierungserhalt-Telegramm abgesendet wird, hier nicht erforderlich ist, verringert dieses Verfahren die Kommunikationsbelastung der Automatisierungsanlage.

Weitere Merkmale und Ausbildungen der Erfindung sind in den Unteransprüchen beschrieben.

Es kann vorgesehen sein, dass die Signale Binärsignale sind. Das Verfahren ist aber auch mit anderen Signalen, wie zum Beispiel analogen Signalen verwendbar.

Außerdem kann vorgesehen sein, dass die Meldungen mit Hilfe von Telegrammen erfolgen.

Im Folgenden werden bevorzugte Ausführungsbeispiele anhand der beigefügten Zeichnungen näher beschrieben.
- FIG. 1: ist eine schematische Darstellung einer Automatisierungsanlage, in der das Verfahren zum Melden von Ereignissen gemäß der Erfindung in einer bevorzugten Ausführungsform abläuft;
- FIG. 2: ist eine schematische Darstellung einer Automatisierungsanlage, in der das Verfahren zum Melden von Ereignissen gemäß dem Stand der Technik abläuft;

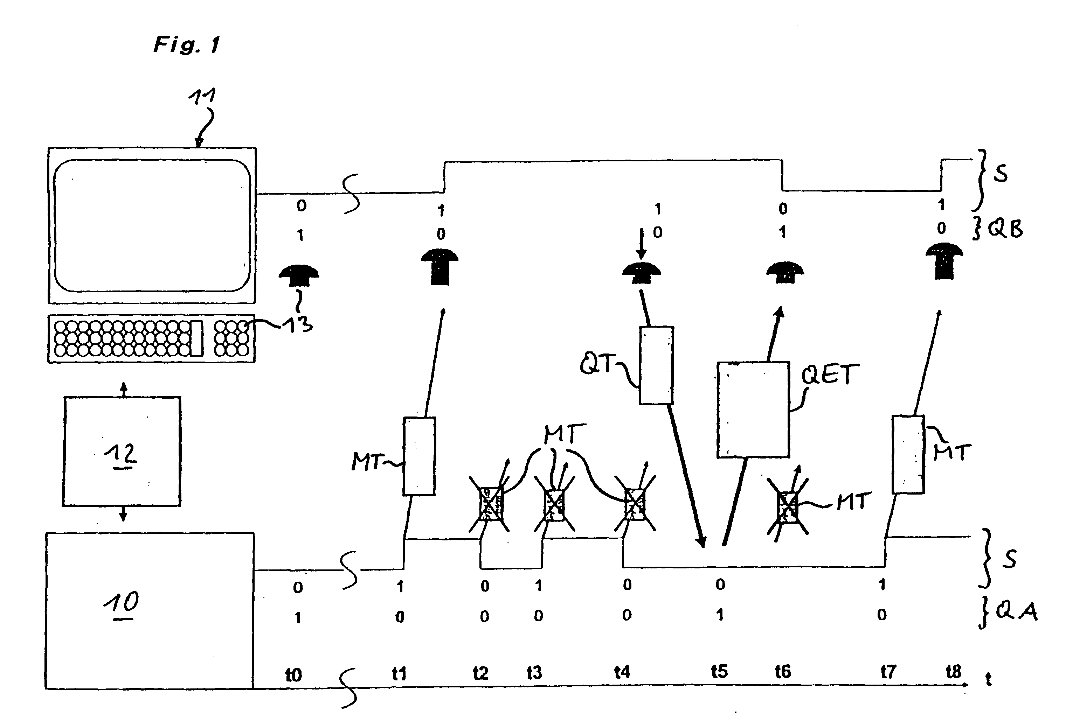

In der FIG. 1 ist die in der FIG. 2 dargestellte einfache Automatisierungsanlage mit einer Automatisierungsstation 10, einer Bedienstation 11 und einem diese verbindenden Bus 12 dargestellt. Außerdem zeigt die FIG. 1, wie schon die FIG. 2, rechts neben der Automatisierungsstation 10 die Zeitverläufe des von dieser erfassten Signals S sowie des von dieser geführten Quittierungszustands QA und rechts neben der Bedienstation 11 die Zeitverläufe des von dieser angezeigten Signals S sowie des von dieser geführten Quittierungszustands QB.

Die Funktionsweise des in dieser Automatisierungsanlage ablaufenden Verfahrens zum Melden von Ereignissen entspricht bis auf die im Folgenden beschriebenen Unterschiede der des weiter oben an Hand der FIG. 2 erläuterten bekannten Verfahrens.

Die Automatisierungsstation 10 meldet im Unterschied zu dem bekannten Verfahren den Erhalt des Quittierungs-Telegramms QT und den Ist-Stand des Signals zum Zeitpunkt t4 zusammen in einem einzigen Telegramm, nämlich in dem Quittierungserhalt-Telegramm QET.

## Patentansprüche

1. Verfahren zum Melden von Ereignissen, mit den Schritten, dass:
eine Automatisierungsstation (10) die Änderungen eines Signals (S), auf das ein Ereignis abgebildet ist, erfasst und an mindestens eine Bedienstation (11) meldet sowie einen Quittierzustand (QA) für eine vorgegebene Signaländerung führt;
die Automatisierungsstation (10) nur dann eine Signaländerung meldet, wenn der Quittierzustand (QA) gesetzt war;
die Automatisierungsstation (10) nur dann den Quittierzustand (QA) löscht, wenn sie die vorgegebene Signaländerung gemeldet hat;
die Bedienstation (11) die gemeldeten Signaländerungen anzeigt und ebenfalls einen Quittierzustand (QB) für die vorgegebene Signaländerung führt;
die Bedienstation (11) nur dann den Quittierzustand (QB) löscht, wenn sie eine Meldung über die vorgegebene Signaländerung erhalten hat;
die Bedienstation (11) eine Quittierung an die Automatisierungsstation meldet;
die Automatisierungsstation (10), wenn sie die Meldung über die Quittierung erhalten hat, den Quittierzustand (QA) setzt und den Erhalt dieser Meldung an alle die Bedienstationen (11) meldet;
die Bedienstation (11), wenn sie die Meldung über den Erhalt der Meldung über die Quittierung erhalten hat, den Quittierzustand (QB) setzt,
**dadurch gekennzeichnet, dass**
die Meldung über den Erhalt der Meldung über die Quittierung eine Information über den aktuellen Signalzustand enthält.

2. Verfahren nach Anspruch 1, **dadurch gekennzeichnet, dass** das Signal (S) ein Binärsignal ist.

3. Verfahren nach Anspruch 1 oder 2, **dadurch gekennzeichnet, dass** die Meldungen mit Hilfe von Telegrammen (MT, QT, QET) erfolgen.

## Claims

1. Method for signalling events, comprising the following steps:
an automation station (10) detects the changes in a signal (S) onto which an event is mapped, signals these changes to at least one control station (11) and carries an acknowledgement state (QA) for a predetermined signal change;
the automation station (10) signals a signal change only when the acknowledgement state (QA) is set;
the automation station (10) deletes the acknowledgement state (QA) only when it has signalled the predetermined signal change;
the control station (11) indicates the signalled signal changes and likewise carries an acknowledgement state (QB) for the predetermined signal change;
the control station (11) deletes the acknowledgement state (QB) only when it has received a message about the predetermined signal change;
the control station (11) signals an acknowledgement to the automation station;
the automation station (10) sets the acknowledgement state (QA) when it has received the message about the acknowledgement and signals the reception of this message to all the control stations (11);
the control station (11) sets the acknowledgement state (QB) when it has received the message about the reception of the message about the acknowledgement,
**characterized in that**
the message about the reception of the message about the acknowledgement contains information about the current signal state.

2. Method according to Claim 1, **characterized in that** the signal (S) is a binary signal.

3. Method according to Claim 1 or 2, **characterized in that** the messages are sent in the form of telegrams (MT, QT, QET).

## Revendications

1. Procédé pour signaler des événements, les étapes étant les suivantes :
- un poste d'automatisation (10) détecte les modifications d'un signal (S) sur lequel est représenté un événement, envoie des messages à au moins un poste de commande (11) et réalise un état d'acquittement (QA) pour une modification prédéfinie du signal,
- le poste d'automatisation (10) signale une modification du signal seulement lorsque l'état d'acquittement (QA) a été réalisé,
- le poste d'automatisation (10) efface ensuite l'état d'acquittement (QA) seulement lorsqu'il a signalé la modification prédéfinie du signal,
- le poste de commande (11) affiche les modifications signalées du signal et réalise également un état d'acquittement (QB) concernant la modification prédéfinie du signal,
- le poste de commande (11) efface l'état d'acquittement (QB) seulement lorsqu'il a obtenu un message concernant la modification prédéfinie du signal,
- le poste de commande (11) signale un acquittement au poste d'automatisation,
- lorsqu'il a obtenu le message concernant l'acquittement, le poste d'automatisation (10) réalise l'état d'acquittement (QA) et signale qu'il a reçu ce message à tous les postes de commande (11),
- lorsqu'il a obtenu le message qui indique que le message d'acquittement a été reçu, le poste de commande (11) réalise l'état d'acquittement (QB),
**caractérisé en ce que** le message qui indique que le message d'acquittement a été reçu contient une information sur l'état actuel du signal.

2. Procédé selon la revendication 1, **caractérisé en ce que** le signal (S) est un signal binaire.

3. Procédé selon la revendication 1 ou 2, **caractérisé en ce que** les messages sont réalisés à l'aide de télégrammes (MT, QT, QET).
